# EUROPEAN PATENT APPLICATION

(11) **EP 4 600 722 A1**
(43) Date of publication of application: **13.08.2025**
(21) Application number: 25157209.5
(22) Date of filing: 11.02.2025
(51) Int. Cl.: G02F 1/11, G02F 1/225, G02F 1/03, G02F 1/05, H01S 3/00

(54) **PRE-COMPENSATION OF INTERFERENCE IN POCKELS CELLS**

(30) Priority: 12.02.2024 US 202463552511 P; 06.02.2025 US 202519047033
(71) Applicant: II-VI Delaware, Inc., Wilmington, DE 19890 (US)
(72) Inventor: BRANIGAN, Kyle, Wilmington, 19890 (US); ARGONDIZZO, Adam, Wilmington, 19890 (US); GENTNER, Harrison, Wilmington, 19890 (US); DAVIS, Ryan, Wilmington, 19890 (US)
(74) Representative: Schmidt, Christian

(57) **Abstract**

This disclosure describes a system and method for providing secondary electrical modulation for acoustic compensation of an electro-optic modulator (EOM) for use in the Long-Wave Infrared (LWIR) and Mid-Wave Infrared (MWIR) spectrum.

## Description

### CROSS REFERENCE TO RELATED APPLICATIONS

This application claims priority to and the benefit of U.S. Provisional Patent Application No. 63/552,511 entitled "SECONDARY ELECTRICAL MODULATION FOR ACOUSTIC COMPENSATION OF EOM FOR USE IN LWIR AND MWIR SPECTRUM" filed February 12, 2024, which is hereby incorporated herein by reference in its entirety.

### BACKGROUND

Limitations and disadvantages of a traditional electro-optic modulator (EOM) will become apparent to one of skill in the art, through comparison of such approaches with some aspects of the present method and system set forth in the remainder of this disclosure with reference to the drawings.

### BRIEF SUMMARY

Systems and methods provide secondary electrical modulation for acoustic compensation of an electro-optic modulator (EOM) for use in Long-Wave Infrared (LWIR) and Mid-Wave Infrared (MWIR) spectrum, substantially as illustrated by and/or described in connection with at least one of the figures, as set forth more completely in the claims.

### BRIEF DESCRIPTION OF THE DRAWINGS

FIG. 1 illustrates an example EOM with a square wave voltage input, in accordance with various example implementations of this disclosure.
FIG. 2 illustrates an example EOM with a voltage input that comprises a secondary electrical signal for pre-compensation of acoustic interference generated by the EOM, in accordance with various example implementations of this disclosure.

### DETAILED DESCRIPTION

The following discussion provides various examples of systems and methods for reducing acoustic interference by using electrical signal pre-compensation. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Light is a fundamental phenomenon with diverse properties and applications, spanning the electromagnetic spectrum from radio waves to gamma rays. While the human eye perceives only the visible spectrum, light extends beyond this range to comprise longer wavelengths, such as infrared, and shorter wavelengths, such as ultraviolet and x-rays. These variations in wavelength correspond to changes in energy and offer unique interactions with materials, enabling specialized technologies. For example, long-wave infrared (LWIR) light, characterized by its lower energy and longer wavelengths compared to visible light, plays a crucial role in fields such as imaging, industrial processing, and advanced optics.

A key attribute of light is its polarization-the orientation of its electric field in space. Polarization can manifest as linear, circular, or elliptical, depending on the interaction of the light wave with materials or filters. This property is particularly significant when working with coherent light sources like lasers, which propagate in a uniform direction and exhibit consistent wavelength and polarization. The ability to manipulate polarization may enable precise control over light for applications such as optical switching and modulation.

The electro-optic effect, specifically the Pockels effect, is central to the operation of electro-optic modulators (EOMs), which allow dynamic control of light polarization. This effect occurs in certain non-centrosymmetric crystals, where an applied electric field induces changes in the refractive index, altering the polarization state of transmitted light. Materials such as cadmium telluride (CdTe), gallium arsenide (GaAs), zinc selenide (ZnSe), zinc sulfide (ZnS), cadmium zinc telluride (CdZnTe or CZT), and boron arsenide (BAs) are among the few capable of supporting this effect in the LWIR and mid-wave infrared (MWIR) spectra due to their specific optical and structural properties.

Pockels cells, a primary component of EOMs, utilize these electro-optic materials to modulate light at high speeds without moving parts. By applying a voltage and/or an electric field across the crystal, the birefringence of the material may be controlled, allowing phase modulation of laser beams with nanosecond precision. This capability is critical in advanced applications, such as extreme ultraviolet (EUV) lithography, where precise timing and modulation of light are essential for producing state-of-the-art microchips.

This disclosure relates to systems and methods for mitigating acoustic interference in electro-optic modulators (EOMs), specifically Pockels cells, by employing active acoustic compensation techniques. Acoustic interference, arising from the piezoelectric effects inherent in electro-optic crystals, may degrade the modulation efficiency and performance of Pockels cells. The disclosed solutions address these challenges by generating secondary compensatory signals to counteract undesirable acoustic effects, resulting in improved system performance.

Pockels cells, which operate on the linear electro-optic effect, modulate light transmission by varying the birefringent properties of a crystal in response to an electric field. Materials exhibiting the linear electro-optic effect inherently also exhibit piezoelectric properties. When a voltage is applied, the piezoelectric effect induces mechanical stress in the crystal, creating acoustic waves that propagate through the assembly. These acoustic waves, in turn, generate stress-induced birefringent effects that can reduce the modulation efficiency (e.g., extinction coefficient) of the EOM.

For example, when modulating a laser beam, the crystal may generate acoustic waves upon each pulse, and the assembly may resonate at specific frequencies. These resonances may cause acoustic ringing, which interferes with the desired modulation behavior. At certain frequencies (e.g., 41 kHz), the interference may be pronounced, while at other frequencies (e.g., 57 kHz), the interference may be negligible. This variability may complicate reliable modulation across a broad frequency range.

The disclosed system and method employ active compensation to reduce or eliminate the effects of acoustic interference in EOMs. This component may effectively attenuate or cancel the acoustic waves generated by the primary electro-optic crystal, achieving a net reduction in interference.

A complex input waveform may be generated by superimposing a secondary electrical signal onto the primary modulation signal. This compensatory signal is configured to produce self-canceling acoustic and electrical effects, reducing interference across the device.

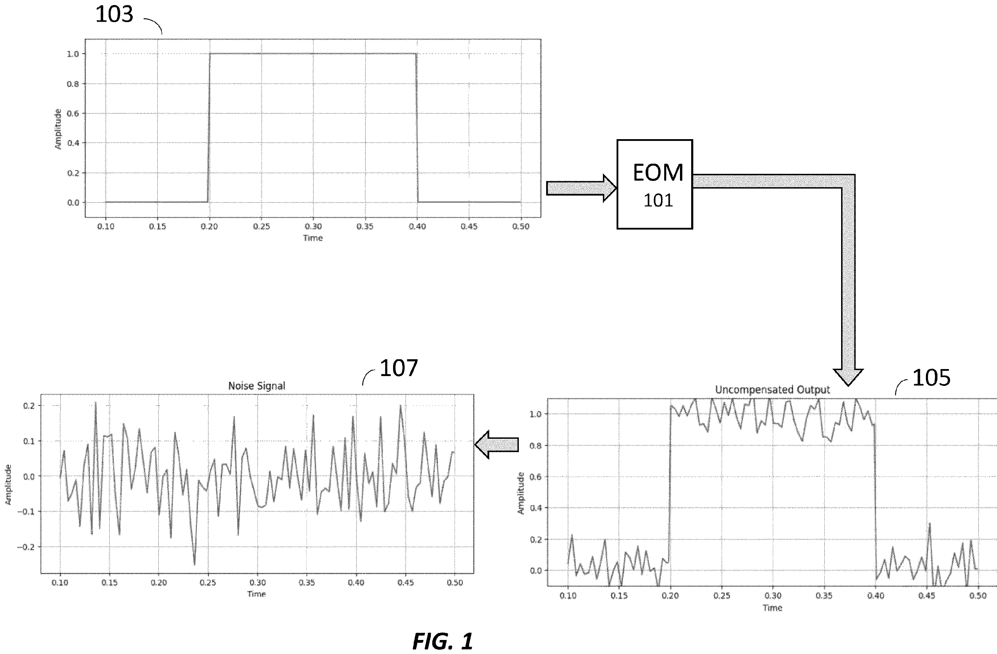

FIG. 1 illustrates an example EOM 101 with a square wave voltage input 103, in accordance with various example implementations of this disclosure. An optical wave 105 undesirably modulated by acoustic waves, caused by the piezoelectric effect, may add an undesired artifact 107 that could interfere with the EOM's performance

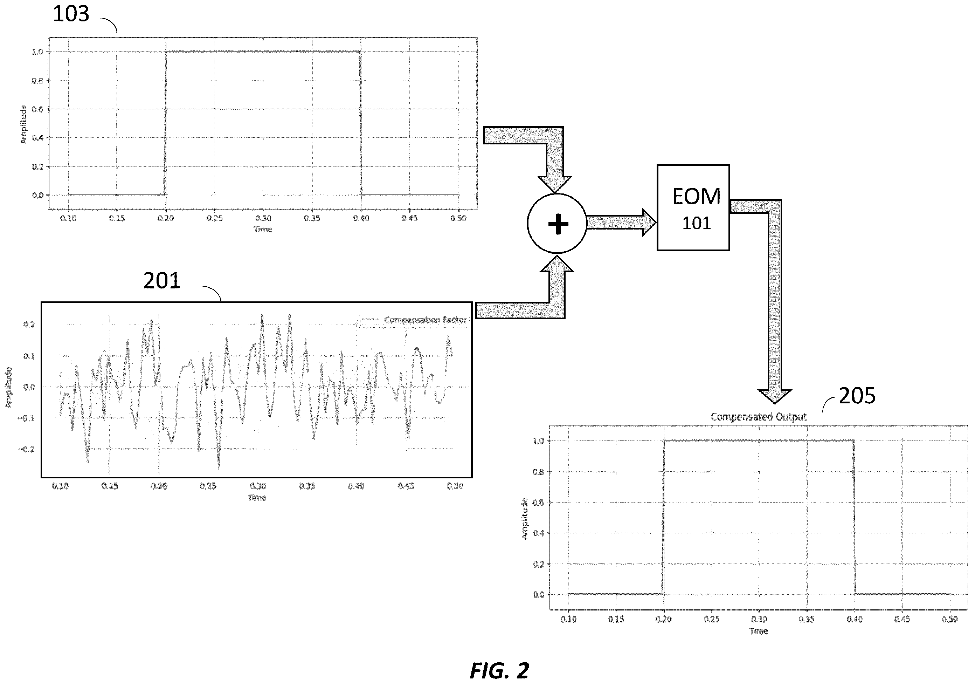

FIG. 2 illustrates an example EOM 101 with a voltage input that comprises a secondary electrical signal 201 for compensation of acoustic interference generated by the EOM 101, in accordance with various example implementations of this disclosure. The compensating signal 201 is added to the input waveform 103 to compensate for the undesired artifact 107 (in FIG. 1) and reduce acoustic interference, thereby generating a cleaner/compensated optical output 205.

A piezoelectric component may generate an opposing acoustic wave that mitigates interference.

The disclosed system may improve the extinction coefficient by reducing stress-induced birefringence caused by acoustic waves. By generating compensating signals dynamically, the disclosed system may avoid dependence on specific pulse frequencies or amplitudes, addressing interference across a wide operational range.

Unlike conventional systems, the disclosed solution effectively handles high power levels while maintaining modulation clarity. The piezoelectric compensating component may comprise the same material as the electro-optic crystal to ensure perfect acoustic matching. For example, a gallium arsenide layer may be bonded to the crystal with a specific crystallographic orientation for optimal performance.

To achieve compensation, the system analyzes the behavior of the EOM at various frequencies using, for example, sensitive electrical equipment such as oscilloscopes. The compensatory waveform may be designed according to this analysis and can be implemented using one of two approaches.

In the first approach (i.e., carrier wave modification) a secondary electrical signal may be superimposed on the primary input signal to create an overall compensating effect.

In the second approach (i.e., circuit-based compensation), a circuit with impedance, resistance, and/or capacitance may be used to generate a compensatory waveform by mimicking the acoustic behavior of the device.

Secondary signals may be driven by the same pulse system as the primary modulation or by an independent circuit. Synchronization may be achieved by designing the secondary waveform to match the acoustic characteristics of the EOM assembly. The secondary waveform may be optimized for a high-frequency laser (e.g., ultraviolet or X-ray) operation.

Mechanical aspects of the system, such as electrode configurations, may be fine-tuned to optimize compensation dynamically. For example, the system may be configured to analyze acoustic waves in real-time for tuning the secondary waveform. The secondary waveform may also be generated according to an algorithm for adaptive signal generation. The secondary waveform may also be continually adjusted according to a feedback signal. The compensating waveform may also be stored as a programmable profile.

The disclosed systems and methods may be applicable to long-wave infrared electro-optic modulators, high-power optical systems, and other devices requiring precise optical modulation. These systems may outperform conventional solutions in terms of efficiency, durability, and acoustic damping while maintaining operational flexibility.

In the disclosed system and method, the secondary waveform may be derived from the primary waveform using a transformation circuit. Additionally, the primary waveform and the secondary waveform may be generated from a common power source.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A system, comprising:
a primary generator configured to generate a primary waveform;
a secondary generator configured to generate a secondary waveform, as a compensating waveform, according to the primary waveform; and
an electro-optic crystal operably coupled to the primary generator and the secondary generator.

2. The system of claim 1, wherein the secondary waveform is derived from the primary waveform using a transformation circuit.

3. The system of claim 1, wherein the secondary waveform is configured to compensate for a thermal stress in the electro-optic crystal.

4. The system of claim 1, wherein the secondary waveform is independently modulated for specific acoustic effects.

5. The system of claim 1, wherein the secondary waveform is generated according to an algorithm for adaptive signal generation.

6. The system of claim 1, wherein the secondary waveform is optimized for a high-frequency laser operation.

7. The system of claim 1, wherein the secondary waveform is continually adjusted according to a feedback signal.

8. The system of claim 1, wherein the primary waveform and the secondary waveform are generated from a common power source.

9. The system of claim 1, wherein the compensating waveform is stored as a programmable profile.

10. The system of claim 1, wherein the system is configured to analyze acoustic waves in real-time for tuning the secondary waveform.

11. A method, comprising:
modulating a Pockels cell via a primary waveform and a secondary waveform; and
reducing an acoustic interference by adapting the secondary waveform according to an optical output.

12. The method of claim 11, wherein the method comprises deriving the secondary waveform according to the primary waveform via a transformation circuit.

13. The method of claim 11, wherein the secondary waveform is configured to compensate for a thermal stress in the Pockels cell.

14. The method of claim 11, wherein the secondary waveform is independently modulated for specific acoustic effects.

15. The method of claim 11, wherein the secondary waveform is generated according to an algorithm for adaptive signal generation.

16. The method of claim 11, wherein the secondary waveform is optimized for a high-frequency laser operation.

17. The method of claim 11, wherein the secondary waveform is continually adjusted according to a feedback signal.

18. The method of claim 11, wherein the primary waveform and the secondary waveform are generated from a common power source.

19. The method of claim 11, wherein the secondary waveform is stored as a programmable profile.

20. The method of claim 11, wherein the acoustic analysis is performed in real-time.
